(19) **Europäisches Patentamt**

**European Patent Office**

**Office européen des brevets**

(11) **EP 1 098 451 A2**

(12) **EUROPEAN PATENT APPLICATION**

(43) Date of publication:
**09.05.2001 Bulletin 2001/19**

(51) Int. Cl.⁷: **H04B 1/707**, H04L 1/00

(21) Application number: **00203815.6**

(22) Date of filing: **02.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **02.11.1999 US 163104 P**

(71) Applicant:
**Sirius Communications N.V.
3110 Rotselaar (BE)**

(72) Inventor: **Philips, Lieven
B - 3201 Aarschot (BE)**

(74) Representative:
**Van Malderen, Joelle et al
Office Van Malderen,
Place Reine Fabiola 6/1
1083 Bruxelles (BE)**

(54) **Non-synchronous access scheme using CDMA and turbo coding**

(57)    The present invention is related to a method for transmission of data from multiple users and reception on a single base station, said data comprising signals from said multiple users, comprising the following steps:

-    A transmission step for a signal from each of said multiple users, said transmission step comprising Turbo encoding said signal as Turbo encoded data and spreading said Turbo encoded data, and

-    A reception step at said base station for said signals, comprising the steps of performing chip phase and carrier frequency acquisition for each of said signals, de-spreading each transmitted signal to obtain de-spread signals and performing Turbo decoding on said de-spread signals.

FIG. 3

EP 1 098 451 A2

**Description**

**Field of the invention**

The present invention is related to a novel access scheme for connecting remote terminals to a network.

**State of the art**

Relevant prior art is discussed in:

(1) Philips et al., U.S. Patent No. 5,872,810: "Programmable Modem Apparatus for Transmitting and Receiving Digital Data, Design Method and Use Method of Said Modem". Said application is herein incorporated by reference.
(2) Philips et al., Patent Application EP-0767544-A2 (EU): "Programmable Modem Apparatus for Transmitting and Receiving Digital Data, Design Method and Use Method of Said Modem".
(3) C. Berrou et al., "Near Shannon Limit Error-Correcting Coding and Decoding: Turbo Codes," Proceedings of the ICC93, Geneva Switzerland, May 23-26, 1993.
(4) Patent applications No FR 9105279 and EP No 92460011.7.

**Aims of the invention**

The present invention aims to provide a novel access scheme for connecting a remote user to a network.
A primary aim is to provide a new technique for communication return links, which does not require a complicated return link protocol.
A further aim is to provide a way to construct remote terminals for such return link transmissions in a cheap way.

**Summary of the invention**

The present invention concerns a method for transmission of data from multiple users and reception on a single base station, said data comprising signals from said multiple users, comprising the following steps:

- A transmission step for a signal from each of said multiple users, said transmission step comprising Turbo encoding said signal as Turbo encoded data and spreading said Turbo encoded data, and
- A reception step at said base station for said signals, comprising the steps of performing chip phase and carrier frequency acquisition for each of said signals, de-spreading each transmitted signal to obtain de-spread signals and performing Turbo decoding on said de-spread signals.

Said signal preferably consists of a preamble part for synchronisation and a message part for user data. Advantageously, said preamble part consists of spread data, and said message part consists of Turbo encoded and spread data.
The relative start times of said multiple transmissions can be unsynchronised. Even with unsynchronised transmissions, the number of transmissions can be equal to or exceed the spreading code length, thanks to the combination of the CDMA processing gain and the Turbo coding gain.
The present invention further relates to the use of the method of the present invention, for realising return links in communication systems.
In an alternative embodiment, the method of of the present invention can be used for realising return links in a satellite communication system with minimal protocol overhead for the remote transmitters.
Another embodiment of the present invention relates to an apparatus for transmitting a signal from a user to a base station, said apparatus comprising transmitting means, a Turbo encoder and a spreader.
Another embodiment of the present invention relates to an apparatus for receiving data from multiple users, said apparatus comprising receiving means, multiple instances of a de-spreader and a Turbo decoder, and an acquisition part to perform chip phase and carrier frequency acquisition.

**Short description of the drawings**

Fig. 1 draws a multiple user to single base station communication situation in a terrestrial network.

Fig. 2 depicts communication according to the present invention in a satellite network.

Fig. 3 represents a transmitter architecture and a receiver architecture.

Fig. 4 shows a detailed block of an acquisition accelerator for the PN code phase timing.

## Detailed description of the invention

The invention describes an access scheme using Direct Sequence Spread Spectrum combined with Turbo channel coding. Access by remote terminals to a network is done by asynchronously (at random) transmitting a burst. This burst contains a preamble for acquisition, and a message part.

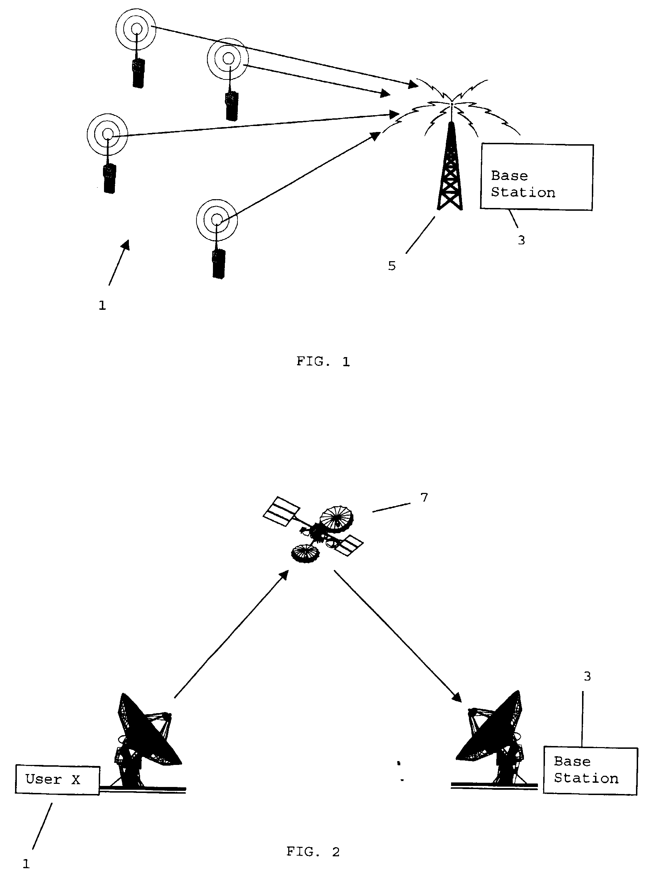

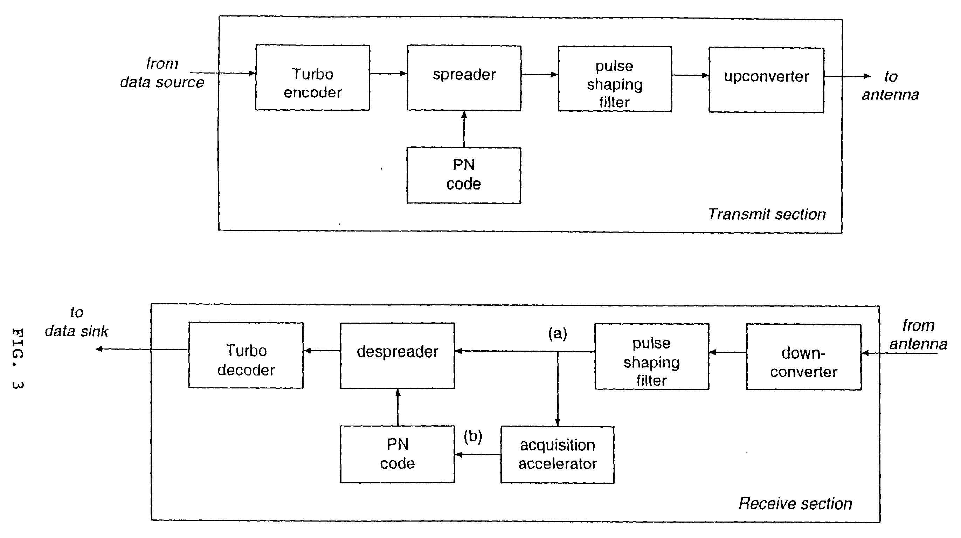

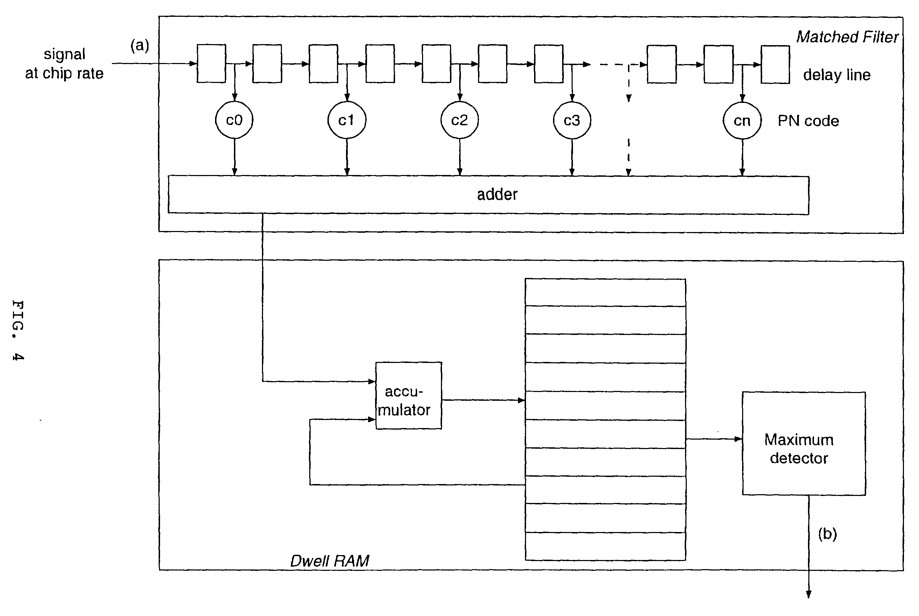

It can be used for terrestrial (see fig. 1) and satellite networks (see fig. 2).

Multiple users 1 send data to base station 3 via receiver antenna 5. Said data are signals that have been Turbo encoded and spread. Said base station 3 receives said, performs chip phase and carrier frequency acquisition for each of said signals, de-spreads each transmitted signal to obtain de-spread signals and performing Turbo decoding on said de-spread signals.

In satellite networks, the same is applicable except that the data is transmitted through satellite communication (via satellite 7), as can be seen in fig. 2.

For satellite applications, existing GEO payloads with spare capacity can be used. The bandwidth requirements depend on the application, but are limited because of the asynchronous CDMA efficiency that can be obtained with the Turbo coding.

The main advantage is that the Multiple Access Interference (MAI) which is high for a high number of users (one actually has an interference-limited system) is effectively tackled by the coding gain of the Turbo code. This high MAI is a consequence of the asynchronous access: when different PN codes are present in the same band, cross-correlations are much higher than when the PN codes would be synchronous. In the correlator of a despreader, this MAI adds up as individual noise sources per chip (in a non-coherent way). The useful energy adds up in a coherent way.

The following acronyms are used in this patent application:

- ACK: Acknowledgement
- CDMA: Code Division Multiple Access
- Eb: Energy per bit
- GPS: Global Positioning System
- Io: Interference spectral density
- MAI: Multiple Access Interference
- No: Noise spectral density
- PN: Pseudo Noise
- PRN: Pseudo Random Noise
- RAM: Random Access Memory

The drawback is the low Eb/N0 for acquisition at the base station or ground station side; therefore one needs acquisition accelerator support (e.g. using a matched filter approach). However, there is no need for extra complexity at the remote terminal side.

Calculation example:

Here are the calculations on the performance of the Turbo-CDMA approach using non-synchronised uplinks. One can calculate the Eb/(N0 + I0) working

point for a direct sequence spread spectrum network with 17 simultaneous users, transmitting in an unsynchronised fashion (Asynchronous CDMA). The users use each a PRN code of length 16.

These codes do not need to belong to a specific code family.

Let S = useful power of the user for whom one performs the calculation

Let I = Multiple Access Interference from the 16 other users.

This means:

If we normalize a chip's amplitude to 1 (one can do so because only ratio's are used here), and one assumes that the received uplinks have equal power (which is valid by good approximation in a GEO network with fixed uplinking users) this results in, at the correlator output of the receiver:

- S = 16^2 (because of the coherent combining in the correlator)
- I = 16 * (16 * 1^2) (because of the non-coherent accumulation of all interferer powers in the correlator)

This yields: S/I = 1 = 0 dB

Furthermore one has (again at the correlator output):

$$S/(I+N) = Eb/(I0+N0) * R/W, \text{ with } W = \text{signal bandwidth and } R = \text{symbol rate}.$$

Neglecting for now the filter roll-off properties, one obtains W/R = 1 approximately.

In this case, one has 20% N0 and 80% I0 (interference-limited situation), resulting in I0/N0 = 4 .

This means that S/(I+N) = S/(1.25 * I) = 0.8 * S/I = 10log(0.8) + 0 dB (see above).

Or: S/(I+N) = Eb/(I0+N0) = -1 dB .

This means one has a 2 dB margin versus the minimum working point condition of -3 dB, and one can get the BER = 10-8 requirement.

<u>Suitable PN codes:</u>

The largest code set from PN codes out of literature is obtained with the "Large Set Kasami codes".

For a PN length of 15, it gives 68 codes.

For a PN length of 63, it gives 520 codes.

These codes have good cross-correlation properties (as good as for Gold codes).

The analysis before has been done based on RANDOM cross-correlation (which is worse than Gold or Kasami cross-correlation). These codes can be generated.

One can also work with less PN codes; collisions between equal codes will only occur when their code phase distance at reception is smaller than 1 chip period (code shift modulation). When code shift modulation is used, the acquisition hardware at the base station or the ground station will monitor several autocorrelation peaks of the same code within 1 symbol period.

Examples of possible applications are e.g. in the satellite applications field:

- A mobile terminal with navigation and communication capabilities: cf. Prior art from Sirius Communications. The navigation solution (GPS/Galileo) and the message are uplinked in a burst, without synchronising to the network. If required, an ACK can be sent by the ground station. High capacity with a small bandwidth is obtained, as the duty cycle of the return link can be very small. Applications: truck fleet tracking, container tracking, tracking of stolen vehicles, vehicle-mounted communication, ...
- Internet return channels for fixed terminals (e.g. PC's equipped with a "satellite modem"). The return channel information is uplinked asynchronously.

The use of asynchronous CDMA in the return links allows thus a relatively simple return link protocol. No special PN codes are required, no synchronisation. Further, to some extent, the same codes can be re-used. The use of the powerful Turbo decoder allows for a high capacity (e.g. 17 users with PRN code length of 16).

**Claims**

1. A method for transmission of data from multiple users and reception on a single base station, said data comprising signals from said multiple users, comprising the following steps:

   - A transmission step for a signal from each of said multiple users, said transmission step comprising Turbo encoding said signal as Turbo encoded data and spreading said Turbo encoded data, and
   - A reception step at said base station for said signals, comprising the steps of performing chip phase and carrier frequency acquisition for each of said signals, de-spreading each transmitted signal to obtain de-spread signals and performing Turbo decoding on said de-spread signals.

2. The method of claim 1, characterised in that said signal consists of a preamble part for synchronisation and a message part for user data.

3. The method as in claim 2, characterised in that said preamble part consists of spread data, and said message part consists of Turbo encoded and spread data.

4. The method of any of the claims 1 to 3, characterised in that the relative start times of said multiple transmissions are not synchronised.

**5.** The method of Claim 4, in which the number of signal transmissions is equal to or exceeds the spreading code length.

**6.** Use of the method of any of the claims 1 to 5, for realising return links in communication systems.

**7.** Use of the method of any of the claims 1 to 5, for realising return links in a satellite communication system with minimal protocol overhead for the remote transmitters.

**8.** An apparatus for transmitting a signal from a user to a base station, said apparatus comprising transmitting means, a Turbo encoder and a spreader.

**9.** An apparatus for receiving data from multiple users, said apparatus comprising receiving means, multiple instances of a de-spreader and a Turbo decoder, and an acquisition part to perform chip phase and carrier frequency acquisition.

FIG. 1

FIG. 2

FIG. 3

FIG. 4